# EUROPÄISCHE PATENTSCHRIFT

(11) **EP 1 990 697 B1**
(45) Veröffentlichungstag und Bekanntmachung des Hinweises auf die Patenterteilung: **04.04.2012**
(21) Anmeldenummer: 08008739.8
(22) Anmeldetag: 09.05.2008
(51) Int. Cl.: G05B 19/4061, G05B 19/4062

(54) **Verfahren zur Kolisionserkennung**
Collision detection method
Procédé de reconnaissance de collision

(30) Priorität: 11.05.2007 DE 102007022784
(43) Veröffentlichungstag der Anmeldung: 12.11.2008
(73) Patentinhaber: Otto Martin Maschinenbau GmbH & Co. KG, 87724 Ottobeuren (DE)
(72) Erfinder: Hörmann, Thomas, 87452 Altusried (DE); Martin, Peter, 87724 Ottobeuren (DE)
(74) Vertreter: Schulz, Manfred

(56) Entgegenhaltungen:
- EP-A- 1 126 346
- EP-A- 1 685 914
- DE-A1- 19 960 834
- DE-A1-102005 015 317
- JP-A- 2004 216 504
- JP-A- 2005 321 890
- US-B1- 6 185 480
- SIEMENS: "Programmieranleitung", SINUMERIK 840D/810D/FM-NC, GRUNDLAGEN, December 1997 (1997-12), pages 4-123-4-126,

## Beschreibung

Die Erfindung betrifft ein Verfahren zur Erkennung einer Kollision bei einer Bearbeitungsmaschine, insbesondere einer Holzbearbeitungsmaschine oder Tischfräse sowie eine Bearbeitungsmaschine, insbesondere eine Holzbearbeitungsmaschine oder Tischfräse, welche insbesondere zur Durchführung des Verfahrens ausgebildet ist. Dabei besitzt die Bearbeitungsmaschine eine für Bearbeitungszwecke und/oder Positionierzwecke jeweils durch Antriebe bewegbares Bearbeitungswerkzeug und/oder zumindest ein für Positionierzwecke durch einen Antrieb bewegbares Maschinenelement. Als Maschinenelement wird in diesem Zusammenhang zum Beispiel ein bewegbarer Anschlag, ein in der Höhe verstellbarer Maschinentisch oder sonstige entsprechend bewegbare Maschinenelemente verstanden.

Die Probleme des Standes der Technik werden nachfolgend exemplarisch an einer Tischfräse beschrieben, wenngleich die Erfindung nicht auf diese spezielle Holzbearbeitungsmaschine zu beschränken ist, sondern grundsätzlich auch allgemein für Holzbearbeitungsmaschinen oder Bearbeitungsmaschinen besteht.

Tischfräsen, wie sie im Stand der Technik bekannt sind, bestehen aus einem Tisch mit einer Tischöffnung. Unter beziehungsweise innerhalb der Tischöffnung ist eine Spindel, insbesondere Antriebsspindel vorgesehen, die einen Aufspanndorn, und dieser wiederum das Bearbeitungswerkzeug trägt. Weiter besitzt eine entsprechende Tischfräse auch einen seitlichen Anschlag. Die Beweglichkeit der gesamten Einheit von Spindel, Aufspanndorn und Werkzeug ist zumindest in axialer Richtung, bezogen auf die Rotationsachse der Spindel, gegeben. Optional ist es natürlich auch möglich, dass eine Verschwenkbewegung möglich ist, wobei die Verschwenkachse bevorzugt in der Tischebene, zum Beispiel parallel zur Längserstreckung des Anschlags, liegt. Neben der axialen Verschiebung der gesamten Spindeleinheit ist natürlich auch eine Beweglichkeit rechtwinklig, also in einer Ebene, möglich.

Hieraus resultieren verhältnismäßig komplexe Bewegungsmöglichkeiten für die Bearbeitungseinheit, bestehend aus Spindel, Aufspanndorn und Bearbeitungswerkzeug.

Des Weiteren ist es bei Tischfräsen häufig möglich, dass die Tischöffnung durch bewegliche Maschinenelemente veränderbar ist. Des Weiteren weisen entsprechende Tischfräsen auch bewegbare Anschläge auf.

Durch diese Beweglichkeit besteht eine erhebliche Kollisionsgefahr zwischen dem Bearbeitungswerkzeug und anderen Maschinenelementen, zum Beispiel dem Tisch oder dem Anschlag. Die eingesetzten Bearbeitungswerkzeuge weisen häufig Schneiden aus Hartmetall auf, die den bei einer Kollision entstehenden Kraftspitzen nicht sicher standhalten. Wird ein Bruch vom Bediener nicht rechtzeitig erkannt, besteht die Gefahr, dass Bruchstücke beim Starten des Spindelantriebes durch die erheblichen Zentriefugalkräfte aus der Maschine geschleudert werden und im schlimmsten Fall die Benutzer erheblich verletzen. Es ist zu beachten, dass die Bearbeitungsgeschwindigkeit in den bekannten Tischfräsen üblicherweise mehrere Tausend Umdrehungen pro Minute beträgt, auch bei Holzbearbeitungsmaschinen sind Spindelantriebe mit 10 bis 15 Tausend Umdrehungen inzwischen bekannt.

Im Stand der Technik wird daher versucht, eine Kollision durch Detektion von Kraft-, Drehmoment- oder Stromspitzen bei den die Bewegung erzeugenden Achsantrieben zu erkennen. Allerdings sind die bewegten Massen, also der Impuls oder Drehimpuls, aber bei für schwere Bearbeitungen eingesetzte Maschinen sehr hoch, weswegen eine sichere Erkennung der Kollision so nur eingeschränkt möglich ist.

Im Stand der Technik ist ein Verfahren zur Korrektur der Position eines ein- oder mehrschneidigen Werkzeuges bekannt. Hierbei wird allerdings das Werkzeug gegen eine Referenzfläche gefahren, um eine genaue Positionierung bzw. Einstellung des Werkzeuges zu gewährleisten.

Aus dem Stand der Technik ist des weiteren auch ein Verfahren zum Positionierten wenigstens eines Werkzeuges einer Werkzeugmaschine bekannt, wobei das Werkzeug in Anlagekontakt zu einer zu bearbeitenden Oberfläche des Werkstückes gebracht wird, und ausgehend von dieser Ausgangsposition die weitere Bearbeitung des Werkstückes über eine CNC-Steuerung der Werkzeugmaschine erfolgt. Das Problem der Kollisionserkennung wird durch diese beiden Lösungen nicht gelöst.

Aus der Druckschrift DE 199 60 834 A1 ist ein Verfahren und eine Vorrichtung zur Störungserfassung, insbesondere zur Kollisionserfassung, im Antriebssystem einer numerisch gesteuerten Werkzeugmaschine" bekannt. Dabei ist mindestens ein Antriebsmotor zur Positionierung eines zu bewegenden Maschinenteils, zum Beispiel eines Vorschubschlittens oder eines X/Y-Kreuzschlittens, über ein oder mehrere Übertragungselemente gekopperlt, wobei die Position des bewegten Maschinenteils direkt am Maschinenteil und zusätzlich indirekt an mindestens einem Ort der Übertragungakette gemessen wird, die direkten und indirekten Positionsmesswerte miteinander verglichen werden und der Messwertevergleichswert unter Berücksichtigung der aktuellen Betriebsbedingungen, wie Bearbeitungsgeschwindigkeit und Beschleunigung/Verzögerung verwendet wird. Hierbei geht es darum, während des Betriebes auftretende Störungen zu erkennen.

Aus der Druckschrift EP 1 126 346 A2 ist eine Überwachungseinrichtung bekannt. Diese dient zur Überprüfung einer vorbestimmten Position eines Körpers oder zur Überprüfung der Anwesenheit eines Körpers, umfassend ein schwenkbar angeordnetes Prüfelement, einen Motor zum Antrieb des Prüfelements und eine Steuereinrichtung zur Steuerung und Regelung der Schwenkbewegung des Prüfelementes.

Die Druckschrift DE 10 2005 015 317 A1 beschreibt ein Verfahren zur gezielten Reaktion bei einem Kontakt, zwischen einem Maschinenelement einer Maschine mit einem Gegenstand und eine diesbezügliche Steuereinrichtung, wobei ein Kontakt zwischen dem Maschinenelement und dem Gegenstand erkannt wird, wobei bei einem erkannten Kontakt, falls die Maschinenachse während des Kontakts mittels einer Steuereinrichtung automatisiert im schnellen Verfahrmodus verfahren wird, ein weiteres Verfahren der Maschinenachse gestoppt wird, indem der Antrieb der Maschinenachse sofort angehalten wird, wobei bei einem erkannten Kontakt, falls die Maschinenachse während des Kontakts mittels einer Steuereinrichtung automatisiert im langsamen Verfahrmodus verfahren wird, eine Kollisionserkennung durchgeführt wird, wobei bei erkannten Kollision ein weiteres Verfahren der Maschinenachse gestoppt wird. Hierbei handelt es sich allerdings um ein Verfahren zur Überwachung einer Kollision während des Verfahrens der Achsen, wie zum Beispiel der Schwenkachsen oder Linearachsen der Maschine. Das Verfahren ist äußerst kompliziert und reagiert erst durch zusätzliches Abbremsen des Antriebes, wenn eine Kollision stattgefunden hat und dadurch Schäden eingetreten sind.

Die vorliegende Erfindung hat es sich zur Aufgabe gemacht, eine möglichst zuverlässige Kollisionserkennung zur Verfügung zu stellen.

Die erfindungsgemäße Aufgabe wird durch ein Verfahren zur Erkennung einer Kollision bei einer Holzbearbeitungsmaschine oder Tischfräse nach Anspruch 1 gelöst, wo zwischen einem in Bearbeitung schnell bewegbaren Bearbeitungswerkzeug und einem übrigen Maschinenelement, wobei das Bearbeitungswerkzeug und/oder das Maschinenelement in ihrer Position veränderlich bewegbar und festlegbar ist und vor dem Bearbeitungsschritt, während einer langsamen, insbesondere sehr langsamen Bearbeitungsbewegung oder mit kleiner beziehungsweise geringer Kraft oder Drehmoment ausgeführte Bearbeitungsbewegung des Bearbeitungswerkzeuges die Bearbeitungsbewegung des Bearbeitungswerkzeuges zeitgleich überwacht wird und bei einer Blockade eine Kollision erkannt wird.

Der wesentliche Vorzug der Erfindung ist, dass die Kollision bei sehr viel, geringer wirkenden Impulsen beziehungsweise eingesetzten Bewegungsenergien (kinetische oder Rotationsenergien) erkannt wird. Die Bewegung ist natürlich immer noch so gewählt, dass die Kollisionsprüfungen in angemessener Zeit abgeschlossen sind, was aber aufgrund der zu überbrückenden Entfernungen oder Abstände kein Problem darstellt.

Wenn bereits weiter vorn von einer langsamen, insbesondere sehr langsamen Bearbeitungsbewegung mit kleiner bzw. geringer Kraft oder einem geringen Drehmoment gesprochen wurde, wird gemäß einer bevorzugten Variante als Geschwindigkeit für das bewegbare Maschinenteil für den Erkennungsvorgang beispielsweise eine Umdrehungszahl von 10 bis 200 Umdrehungen pro Minute, insbesondere 50 bis 150 Umdrehungen pro Minute, bevorzugt 100 Umdrehungen pro Minute, verwendet bzw. eingestellt. Dabei wird das Drehmoment so gering gehalten, daß es möglich ist, das bewegbare Maschinenteil gegebenfalls ohne Verletzungsgefahr von Hand anzuhalten. Die Geschwindigkeit ist dabei weiterhin so gewählt, daß keine Beschädigung am bewegbaren Maschinenteil eintritt, wenn eine Kollision erfolgt. Üblicherweise rotiert das Werkzeug an einer solchen Bearbeitungsmaschine mit einer Geschwindigkeit von 3000 bis 12000 Umdrehungen pro Minute. Die Motorleistung schwankt dabei ebenfalls je nach Maschinentyp zwischen 5,5 bis 11 kw. Erfindungsgemäß wird demnach in einem Drehzahlbereich zwischen 0,1 bis 5 % der normalen Drehzahl, bevorzugt zwischen 0,8 bis 3 %, gearbeitet. Daraus wird ersichtlich, daß speziell für das Verfahren zur Erkennung einer Kollision das bewegbare Maschinenteil langsam, insbesondere sehr langsam oder mit kleiner bzw. geringer Kraft oder mit geringem Drehmoment bewegt wird, während die Bewegung zeitgleich überwacht wird und bei einer Blockade eine Kollision erkannt wird.

Die Erfindung erreicht daher, ohne eine spürbare Einschränkung in der Bearbeitungsgeschwindigkeit darzustellen, eine erhebliche Verbesserung des Arbeitsschutzes, da die Gefahr von aus dem Bearbeitungswerkzeug herausgeschleuderten Schneiden oder dergleichen aufgrund einer Kollision mit einem anderen Maschinenelement nach der Erfindung ausgeschlossen ist. Diese erhebliche Verbesserung des Arbeitsschutzes geht einher mit letztendlich geringeren Unterhaltskosten für das Werkzeug, da die zur Erkennung der Kollision verwendete Blockade nur so geringe Kraftspitzen aufweist, die in der Regel nicht zu einer Beschädigung des Bearbeitungswerkzeuges führen.

Der allgemeine Kollisionsfall ist, dass eine Kollision mit dem Bearbeitungswerkzeug droht. Hierauf ist die Erfindung aber nicht beschränkt, da im Prinzip jede kollisionsgefährdete Achse gemäß dem erfindungsgemäßen Verfahren überwachbar ist und so zu einer sicheren und umfassenden Kollisionserkennung beiträgt.

Die Erfindung betrifft auch eine Holzbearbeitungsmaschine nach Anspruch 5, wobei die Bearbeitungsmaschine eine für Bearbeitungszwecke und/oder Positionierzwecke jeweils durch Antriebe bewegbares Bearbeitungswerkzeug und/oder zumindest ein für Positionierzwecke durch einen Antrieb bewegbares Maschinenelement (z. B. einen Anschlag, einen Tisch bzw. Auflagetisch oder eine Begrenzungsfläche einer Tischöffnung usw.) aufweist, wobei während einer Kollisionsprüfung das Bearbeitungswerkzeug und/oder das Maschinenelement durch den jeweiligen Antrieb langsam, insbesondere sehr langsam, bevorzugt mit kleiner beziehungsweise geringster Kraft oder Drehmoment bewegt wird.

Dem eigentlichen Bearbeitungsschritt ist ein Kollisionsprüfungsschritt vorgeschaltet. Innerhalb dieses Kollisionsprüfungsschrittes, welcher zum Beispiel gleichzeitig mit dem Einstellschritt erfolgen kann (oder diesem kurz danach nachfolgen kann), wird die Kollisionsprüfung wie beschrieben durchgeführt, wobei diese Kollisionsprüfung bei ganz anderen kinetischen Bedingungen, also bei deutlich geringeren Geschwindigkeiten beziehungsweise Kraft oder Drehmoment erfolgt. Im Stand der Technik wird nach dem Einstellprozess in möglichst kurzer Zeit die Bearbeitung der Spindeln auf volle Drehzahlen beschleunigt, wodurch die Probleme, wie beschrieben, entstehen.

Dies wird durch die erfindungsgemäße Bearbeitungsmaschine gerade vermieden.

Im Sinne der Erfindung wird der Begriff "Bewegung" sehr umfassend definiert und verstanden. Wie bereits ausgeführt, umfasst der Begriff "der Bewegung" nicht nur den dem Bearbeitungswerkzeug entsprechende Bearbeitungsbewegung (z.B. bei einem rotierenden Fräser dessen Rotationsbewegung), sondern auch jedwege andere Bewegung, insbesondere Positionierbewegung.

Wesentlich bei der Erfindung ist, dass die Kollisionsüberprüfung bei einer langsamen, insbesondere sehr langsamen Bewegung des jeweiligen Maschinenteiles (im Maschinenelement oder Bearbeitungswerkzeug) erfolgt. Bezogen zum Beispiel auf die Rotationsbewegung des Bearbeitungswerkzeuges beziehungsweise seine Bearbeitungsbewegung im Bearbeitungsschritt unterscheiden sich die Geschwindigkeiten der schnellen Bewegung und langsamen Bewegung um mindestens eine Zehnerpotenzen. So wird zum Beispiel hier eine langsame beziehungsweise sehr langsame Bewegung im Bereich von wenigen (z.B. 1 bis 100) Umdrehungen pro Minute, die Bearbeitungsbewegung aber mit mehreren Tausend Umdrehungen pro Minute, anzugeben sein.

Des Weiteren wird auf die eingesetzten Bewegungskräfte, beziehungsweise Bewegungsdrehmomente abgestellt, die erfindungsgemäß möglichst gering sein sollen, wobei diese zum Beispiel im Bezug auf die notwendigen Bruchkräfte des Werkzeuges zu sehen sind. Dabei wird geschickterweise eine solche Kraft oder Drehmoment vorgesehen, die ausreichend kleiner ist wie die aufzuwendende Kraft, die zu einem Abbrechen der Schneide notwendig ist.

Es kann sich daher durchaus ergeben, dass die Einstellbewegung, wie sie bislang bekannt ist, ausreichend langsam ist, da sie unter den vorgenannten Kraft- beziehungsweise Drehmomentkriterien bleibt, aber zusätzlich wird diese Bewegung überwacht, das heißt ein andauernder Soll-Ist-Vergleich, zum Beispiel bezüglich der resultierenden Geschwindigkeit oder bezüglich der erreichten Position durchgeführt wird, und bei einem Abweichen dieses Soll-Ist-Vergleiches auf eine Blockade geschlossen wird, weil zum Beispiel in dem Bewegungsraum des Bearbeitungswerkzeuges ein anderes Maschinenteil hineinsteht und behindert und aufgrund dieser Blockade eine Kollision erkannt wird, die als entsprechende Warnmitteilung in der Steuerung ausgegeben wird.

Bezieht sich das erste erfindungsgemäße Verfahren sehr allgemein auf jedwege Bearbeitungs- oder Positionierbewegung des Bearbeitungswerkzeuges beziehungsweise des Maschinenelementes, so betrifft das zweite erfindungsgemäße Verfahren die speziellere Situation gerade bei der Bearbeitungsbewegung des Bearbeitungswerkzeuges.

Die erfindungsgemäße Aufgabe wird aber des Weiteren auch durch eine Bearbeitungsmaschine, insbesondere eine Holzbearbeitungsmaschine oder Tischfräse gelöst, wobei die Bearbeitungsmaschine eine für Bearbeitungszwecke und/oder Positionierzwecke jeweils durch mindestens einen Antrieb bewegbares Bearbeitungswerkzeug und/oder zumindest ein für Positionierzwecke durch einen Antrieb bewegbares Maschinenelement aufweist. Erfindungsgemäß wird dabei vorgeschlagen, dass während einer Kollisionsprüfung das Bearbeitungswerkzeug und/oder das Maschinenelement durch den jeweiligen Antrieb langsam, insbesondere sehr langsam, insbesondere mit kleiner beziehungsweise geringer Kraft oder Drehmoment bewegt wird.

Durch das konkrete Durchführen der Kollisionsprüfung mit möglichst geringen bewegten Massen beziehungsweise eingesetzten Impulsen oder Energien kann (fast) schadlos eine Kollisionsprüfung vor dem eigentlichen Bearbeitungsschritt durchgeführt werden.

Üblicherweise ist ein Antrieb für eine Bewegungsrichtung oder eine Bewegungsachse (Längsverfahrbarkeit, Rotationsbewegung) vorgesehen. Grundsätzlich ist die Erfindung aber nicht beschränkt, einen Antrieb durch entsprechende geschickte Kupplung oder Getriebe auch für verschiedene unterschiedliche Zwecke, also Positionierzwecke oder Bearbeitungszwecke, einzusetzen. Auch diese Lösung gehört zur Erfindung.

Geschickterweise wird ein frequenzgeregelter Antrieb eingesetzt, wobei die Regelfrequenz die Geschwindigkeit des Antriebes einstellbar gestaltet. Ein zusätzlicher Aufwand für den Antrieb ist daher nicht erforderlich.

Alternativ hierzu ist aber auch vorgesehen, dass an dem Antrieb für die Kollisionsprüfung ein Zusatzantrieb ankoppelbar ist. In diesem Fall besitzt die Antriebsachse zum Beispiel eine betätigbare Kupplung über die dann ein mit möglichst geringer Kraft und/oder Drehmoment betreibbarer Zusatzantrieb einsetzbar ist.

Erfindungsgemäß ist eine Überwachung der Bewegung vorgesehen, welche jetzt gegenständlich durch eine Bewegungsüberwachung des bewegten Bearbeitungswerkzeuges beziehungsweise Maschinenelementes während der Kollisionsprüfung realisiert wird. Wiederum umfasst die Bewegungsüberwachung am besten jede sich bewegende, kollisionsgefährdete Maschinenachse, also sowohl die Rotationsachse wie auch die Längspositionierachsen. Geschickterweise wird die Bewegungsüberwachung zum Beispiel durch eine integrierte Einheit zur Drehungserkennung bei der Rotationsbewegung des Bearbeitungswerkzeuges realisiert. Es gibt aber eine Vielzahl anderer Lösungsansätze hierzu.

Beispielhaft wird hierzu zum Beispiel erfindungsgemäß als Bewegungsüberwachung auf eine Geschwindigkeits- oder Positionsüberwachung verwiesen. Bei der Geschwindigkeitsüberwachung wird ein Soll-Ist-Vergleich bezüglich der Geschwindigkeit durchgeführt. Den zum Beispiel als frequenzgeregelten ausgestatteten Antrieb wird eine entsprechende Frequenz vorgegeben, woraus bekanntermaßen eine entsprechende Geschwindigkeit des Maschinenteiles resultiert. Auf einem mit dem Maschinenteil verbundenen Meßsystem wird die resultierende, also von dem Maschinenteil ausgeführte Geschwindigkeit gemessen und dieser Ist-Wert sofort laufend mit dem Soll-Wert verglichen. Tritt hier ein Unterschied auf, wird von einer Kollision ausgegangen und die Steuerung in dem Kollisionsfall als Status gestellt und entsprechende Maßnahmen, wie zum Beispiel Anhalten der Anlage und/oder Fehlermitteilung, ausgegeben.

Neben einer Geschwindigkeitsüberwachung ist natürlich auch eine Positionsüberwachung als Bewegungsüberwachung erfindungsgemäß vorgesehen. Auch hier geht man davon aus, dass bei aktiviertem Antrieb eine entsprechende Positionsänderung des entsprechend angetriebenen Maschinenteiles zu beobachten ist. Verbleibt das entsprechend überwachte Maschinenteil aber eine gewisse Toleranzzeit unverändert, so ist von einer Blockade und wiederum wie oben beschrieben von einer Kollision auszugehen, die entsprechend zu behandeln ist.

Geschickterweise weist die erfindungsgemäße Bearbeitungsmaschine eine Steuerung für die Bewegungsüberwachung auf. Die Steuerung hat zum einen die jeweilige Kollisionsüberwachung mit zu beherrschen oder zu führen und wertet auf der anderen Seite die Ergebnisse der Bewegungsüberwachung aus und gibt entsprechende Steuerungssignale an die Maschinensteuerung weiter.

Diese Steuerung kann entweder Teil der Maschinensteuerung sein oder von dieser separat als getrennte Einheit ausgebildet sein.

Vorteilhafterweise ist die Bewegungsüberwachung durch einen Steuer-Regel-Kreis ausgebildet, was in einfacher Weise den Soll-Ist-Vergleich erlaubt.

Ergibt es sich, dass von der Bewegungsüberwachung, trotz aktivierten Antriebes, keine Bewegung festgestellt wird, so wird von der Steuerung ein Kollisionssignal ausgegeben und/oder die Steuerung schaltet den Antrieb ab, um weiteren Schaden von vornherein sicher zu vermeiden. Das von der Steuerung abgegebene Kollisionssignal kann dann auf vielfache Weise in anderen Steuerungen oder Steuerungsteilen ausgenützt und abgefragt werden.

Erfindungsgemäß ist zum Beispiel als bewegbares Maschinenelement ein Anschlag, ein Tisch oder eine Begrenzungsfläche einer Tischöffnung vorgesehen. In der Regel weist eine erfindungsgemäße Bearbeitungsmaschine mehrere bewegbare kollisionsgefährdende Maschinenelemente auf. Erfindungsgemäß reicht es aber bereits aus, wenn eines dieser Maschinenelemente erfindungsgemäß überwacht wird.

Das erfindungsgemäße Verfahren sieht vor, dass die Bewegung zeitgleich überwacht wird und bei einer Blockade eine Kollision erkannt wird. Es ist also zunächst das Ziel des Verfahrens, im Falle der Kollision ein entsprechendes Signal zu erzeugen, das dann für weitere Aktionen Voraussetzung ist. Zum Beispiel kann aufgrund dieses Signals die Bewegung der kollidierten Achse sofort eingestellt werden. Das Verfahren kann dabei nicht nur auf die Bewegung des Werkzeuges, also der Rotationsbewegung, sondern bei allen kollisionsgefährdeten Bewegungen von Maschinenelementen (Tisch, Anschlag) eingesetzt werden und ist daher sehr universell verwendbar.

Nach einer Kollision wird in einer erfindungsgemäßen Variante zunächst die Bewegung angehalten.

In einer weiteren bevorzugten Variante der Erfindung ist vorgesehen, dass als Bewegung die Positionierbewegung des Bearbeitungswerkzeuges beziehungsweise des Maschinenelementes zumindest kurzzeitig gestoppt und dann umgesteuert wird. Auch diese Aktion wird durch das Erkennen der Kollision aufgrund der Blockade ausgelöst und führt zumindest kurzzeitig zu einem Stoppen der kollidierenden Bewegung und dann sofort zu einer Rückzugsbewegung, um das kollisionsgefährdete Objekt aus dem Kollisionsbereich möglichst schnell wieder herauszubringen. Die Bewegungsumsteuerung braucht dabei daher nicht mit den geringen Geschwindigkeiten wie die Bewegungsüberwachung erfolgen. Es kann hierzu gegebenenfalls im Notfall eine höhere Geschwindigkeit und auch höhere angreifende Kräfte oder Drehmomente Verwendung finden.

Es ist nach der Erfindung klar, dass die Bewegung sowohl die Bearbeitungsbewegung des Bearbeitungswerkzeuges wie auch die Positionierbewegung des Bearbeitungswerkzeuges oder anderen Maschinenelemente ist, die insbesondere nach der erfindungsgemäßen Variante gestoppt werden.

Die Erfindung beschränkt sich nicht nur darauf, dass eine, nämlich die kollisionsüberwachte oder gefährdete Achse, entsprechend dem Verfahren überwacht wird und alle anderen Elemente still stehen. Das erfindungsgemäße Verfahren kann auch bei zwei oder mehreren gleichzeitig bewegten Maschinenteilen, also Bearbeitungswerkzeug und/oder Maschinenelement, eingesetzt werden. Es ist auch grundsätzlich möglich, mit unterschiedlichen Positioniergeschwindigkeiten die jeweilige Bewegung durchzuführen.

Nach der Erfindung ist es natürlich auch mögich, dass die Bearbeitungsbewegung des Bearbeitungswerkzeuges, welches sich entsprechend langsam bewegt, überwacht wird, während zeitgleich das Bearbeitungswerkzeug und/oder das Maschinenelement bezüglich seiner Position bewegt wird und dann unter Umständen in einen kollisionsgefährdeten Zustand gelangt. In diesem Fall würde dann, falls eine Blockade eintritt, die Möglichkeit bestehen entweder sofort die (langsame) Bearbeitungsbewegung auszuschalten und/oder sofort auch die Positionierbewegung anzuhalten oder zurückzuziehen.

Erfindungsgemäß wird vorgesehen, dass die Bearbeitungsbewegung durch eine Geschwindigkeitskontrolle oder Positionsveränderungskontrolle überwacht wird. Diese Beispiele schließen andere Möglichkeiten der Bewegungsüberwachung nicht aus. Alternativ ist zum Beispiel vorgesehen, dass die Motorströme des für die langsame Bewegung des Maschinentisches verwendeten Antriebes für die Überwachung der Bewegung verwendet wird. Es ist aber auch möglich, zum Beispiel die Drehbewegung des rotatorisch angetriebenen Bearbeitungswerkzeuges beispielsweise über einen Drehgeber, einen Initiator mit entsprechend ausgesparter Gegenscheibe, optisch oder mit Magneten usw. ausbilden.

Es ist klar, dass während des Bearbeitungsschrittes, welcher dann nach positiv abgeschlossener Kollisionsprüfung erfolgt, eine deutlich schnellere Rotationsbewegung als Bearbeitungsbewegung des Bearbeitungswerkzeuges erfolgt. Neben der üblicherweise eingesetzten Rotationsbewegung umfasst die Erfindung natürlich auch entsprechende Linearbearbeitungsachsen. Auch diese Lösung zählt zur Erfindung.

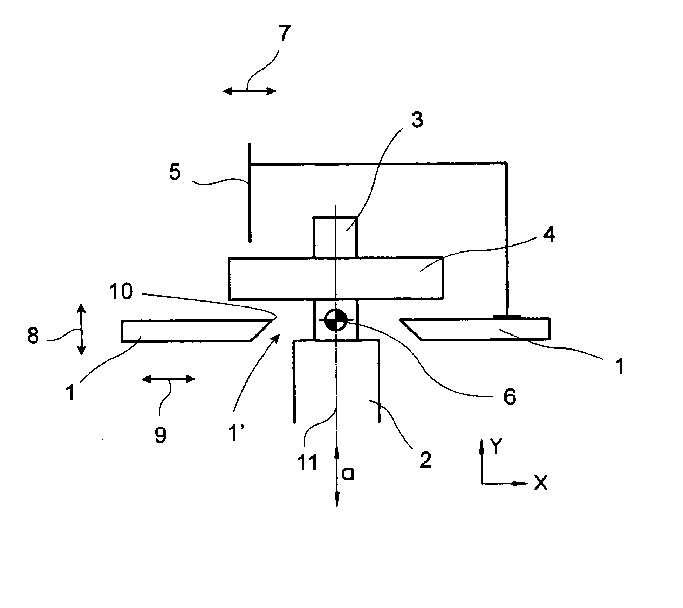

Die Erfindung ist schematisch in der Zeichnung dargestellt.

Die Zeichnung zeigt eine schematische Bearbeitungsmaschine, in diesem Fall eine Tischfräse, in Seitenansicht.

Ein nicht gezeigtes Werkstück liegt zumindest auf dem linken Teil des Bearbeitungstisches 1 auf. In dem Tisch ist eine Tischöffnung 1' vorgesehen, in welcher eine Antriebsspindel 2 von unten hervorragt. Die Antriebsspindel 2 trägt an ihrem oberen Ende einen Aufspanndorn 3, auf welchen das Bearbeitungswerkzeug 4 aufgespannt ist. Es handelt sich hierbei zum Beispiel um einen Fräser mit an seiner Mantelfläche angeordneten Schneiden.

Die Einheit von Antriebsspindel 2, Aufspanndorn 3 und Bearbeitungswerkzeug 4 erstreckt sich teilweise überhalb und teilweise unterhalb des Bearbeitungstisches 1 und ist in Richtung der Rotationsachse 11 der Antriebsspindel 2 verstellbar, um eine gewisse Höheneinstellbarkeit zu erreichen. Dies ist durch den Doppelpfeil a angedeutet. Diese Beweglichkeit ist auch gleichzeitig die erste Kollisionsgefahr, da zum Beispiel der untere Rand der Antriebsspindel mit dem Bearbeitungstisch 1 kollidieren kann, wenn die Antriebsspindel abgesenkt wird.

Die Antriebsspindel 2 ist dabei nicht nur rechtwinklig zur Tischebene (Doppelpfeil a) beweglich, sondern auch parallel hierzu, was durch die beiden rechtwinklig zueinander angeordneten Pfeile X, Y angedeutet ist.

Hieraus resultiert eine Kollisionsgefahr für die Antriebsspindel 2 mit dem Bearbeitungstisch 1 und zwar an den jeweiligen Rändern der Tischöffnung 1'. Es ist daher vorgesehen, dass zum Beispiel dieser Begrenzungsbereich 10 der Tischöffnung rechtwinklig zur Spindelachse verschieblich ist und so einer X-Bewegung der Antriebsspindel ausweichen kann. Dies ist durch den Doppelpfeil 9 schematisch angedeutet. Dieser Begrenzungsbereich 10 ist auch ein bewegbares Maschinenelement beziehungsweise -teil.

Für Einstellzwecke ist natürlich auch die Tischhöhe des Bearbeitungstisches 1 veränderlich, was durch den Doppelpfeil 8 angedeutet ist. Hierdurch riskiert man wieder eine Kollision der Tischoberfläche mit dem Bearbeitungswerkzeug 4.

Auch der Anschlag 5, der sich oberhalb des Bearbeitungswerkzeuges auf der Seite des Bearbeitungstisches 1, wo das Werkstück anliegt, anschließt, birgt eine Kollisionsgefahr zum einen durch die nach Y-Richtung vorgeschobene Spindel beziehungsweise aufgrund der in X-Richtung bestehenden Beweglichkeit des Anschlages 5 für Einstellzwecke, die durch den Doppelpfeil 7 angedeutet ist.

Des Weiteren ist eine Verschwenkachse 6 für das Bearbeitungswerkzeug 4 vorgesehen, welche in diesem Fall die gesamte Einheit von Antriebsspindel, Aufspanndorn und Bearbeitungswerkzeug um eine hier in der Tischebene liegende, rechtwinklig zur Zeichenebene stehende Verschwenkachse 6 schwenkt. Es ist klar, dass dann die vordere untere Kante des Bearbeitungswerkzeuges 4 mit dem Bearbeitungstisch 1 kollidieren kann beziehungsweise die Oberseite des Fräsers mit dem unteren Rand des Anschlages 5 sowie der Begrenzungsbereich 10 der Tischöffnung 1' durch die Antriebsspindel 2 oder den Aufspanndorn 3 beschädigt werden.

Die Zeichnung macht klar, dass die Gefahr für Kollisionen an einer verhältnismäßig einfachen Tischfräse vielfältig sind und durch das erfindungsgemäße Verfahren, wie auch durch die erfindungsgemäß ausgestattete Bearbeitungsmaschine, in zuverlässiger Weise beherrschbar sind. Günstigerweise ist jede kollisionsgefährdete Achse mit einer entsprechenden Überwachung ausgestattet, wobei die Erfindung sowohl für die Überwachung mehrerer Bewegungen kollidierender Achsen wie auch nur für die Überwachung der Bewegung einer kollisionsbedrohten Achse ausgestattet ist.

## Patentansprüche

1. Verfahren zur Erkennung einer Kollision bei einer Holzbearbeitungsmaschine oder Tischfräse zwischen einem in Bearbeitung schnell bewegbaren Bearbeitungswerkzeug und einem übrigen Maschinenelement, wobei das Bearbeitungswerkzeug mittels eines Antriebes in eine Rotationsbewegung als Bearbeitungsbewegung versetzbar ist und das Bearbeitungswerkzeug und/oder das übrige Maschinenelement in seiner/ihrer Position veränderbar und festlegbar ist, **dadurch gekennzeichnet, dass** vor einem Bearbeitungsschritt während einer langsamen Rotationsbewegung oder mit kleiner beziehungsweise geringer Kraft oder geringem Drehmoment ausgeführten Rotationsbewegung des Bearbeitungswerkzeuges diese zeitgleich überwacht und bei einer Blockade eine Kollision erkannt wird, während der Rotationsbewegung zeitgleich das Bearbeitungswerkzeug und/oder das Maschinenelement bezüglich seiner/ihrer Position bewegt wird/werden und die Rotationsbewegung mit so kleiner Kraft oder so kleinem Drehmoment erfolgt, dass bei einer erkannten Kollision keine Beschädigung am Bearbeitungswerkzeug oder am bewegbaren Maschinenelement eintritt.

2. Verfahren nach Anspruch 1, **dadurch gekennzeichnet, dass** als Drehzahl für das Bearbeitungswerkzeug für den Erkennungsvorgang 10 bis 200 Umdrehungen pro Minute, bevorzugt ca. 100 Umdrehungen pro Minute, vorgesehen sind und/oder die Drehzahl zwischen 0,1 bis 5 % der normalen Drehzahl der Bearbeitungsmaschine, bevorzugt zwischen 0,4 bis 3 %, beträgt.

3. Verfahren nach einem der vorhergehenden Ansprüche, da durch **gekennzeichnet**, dass das Drehmoment des Bearbeitungswerkzeuges für den Erkennungsvorgang so gering gehalten ist, dass es möglich ist, das bewegbare Maschinenteil gegebenenfalls ohne Verletzungsgefahr von Hand anzuhalten.

4. Verfahren nach einem der vorhergehenden Ansprüche, **dadurch gekennzeichnet, dass** die Rotationsbewegung durch eine Geschwindigkeitskontrolle oder Positionsveränderungskontrolle überwacht wird.

5. Holzbearbeitungsmaschine oder Tischfräse zur Durchführung des Verfahrens nach einem der vorhergehenden Ansprüche, wobei die Bearbeitungsmaschine ein für Bearbeitungszwecke und/oder Positionierzwecke jeweils durch einen Antrieb bewegbares Bearbeitungswerkzeug und/oder zumindest ein für Positionierzwecke durch einen Antrieb bewegbares
Maschinenelement aufweist, **dadurch gekennzeichnet, dass** eine Überwachung der Rotationsbewegung des Bearbeitungswerkzeuges während der Kollisionsprüfung vorgesehen ist und während der Kollisionsprüfüng das Bearbeitungswerkzeug durch den jeweiligen Antrieb langsam, insbesondere sehr langsam mit einer Drehzahl von 10 bis 200 U/Min. und mit so geringerem Drehmoment bewegt wird, dass keine Beschädigung am Bearbeitungswerkzeug oder Maschinenelement eintritt.

6. Holzbearbeitungsmaschine nach Anspruch 5, **dadurch gekennzeichnet, dass** ein frequenzgeregelter Antrieb vorgesehen ist und über die Regelfrequenz die Geschwindigkeit des Antriebes einstellbar ist.

7. Holzbearbeitungsmaschine nach einem der vorhergehenden Ansprüche 5 und 6, **dadurch gekennzeichnet, dass** an dem Antrieb für die Kollisionsprüfung ein Zusatzantrieb ankoppelbar ist.

8. Holzbearbeitungsmaschine nach einem der vorhergehenden Ansprüche 5 bis 7, **dadurch gekennzeichnet, dass** die Bearbeitungsmaschine eine Steuerung für die Bewegungsüberwachung aufweist.

9. Holzbearbeitungsmaschine nach einem der vorhergehenden Ansprüche 5 bis 8, **gekennzeichnet durch** einen Steuer-Regel-Kreis für die Bewegungsüberwachung.

10. Holzbearbeitungsmaschine nach einem der vorhergehenden Ansprüche 5 bis 9, **dadurch gekennzeichnet, dass** sobald von der Bewegungsüberwachung, trotz aktivierten Antriebs, keine Bewegung festgestellt wird, von der Steuerung ein Kollisionssignal ausgegeben wird und/oder die Steuerung den Antrieb abschaltet.

11. Holzbearbeitungsmaschine nach einem der vorhergehenden Ansprüche 5 bis 10, **dadurch gekennzeichnet, dass** als bewegbares Maschinenelement ein Anschlag, ein Tisch oder eine Begrenzungsfläche einer Tischöffnung vorgesehen ist.

## Claims

1. Procedure to detect within a woodworking machine or a table milling machine a collision between a machine tool able to move fast during the machining step and another machine element whereby the machining tool can be driven into a rotational machining movement and the position of the machining tool and/or of the other machine element can be adjusted and blocked, **characterized in that** in a step prior to the machining step the machining tool is rotating slowly or driven with a small and low force or torque and permanently surveyed and any blocking detected as a collision while the machining tool is rotating at the same time as the position of the machining tool and/or of the other machine element is changed whereby the rotational movement is driven with such a small force or torque that a detected collision does not produce any damage to the machining tool or to the mobile machine element.

2. Procedure according to claim 1, **characterized in that** the rotational speed of the machining tool during the detection step is situated between 10 and 200 revolutions per minute and preferably 100 revolutions per minute and/or **in that** the rotational speed is situated between 0.1% and 5% of the nominal rotational speed of the machining tool and preferably situated between 0.4% and 3%.

3. Procedure according to one of the preceding claims, **characterized in that** the machining tool torque is fixed for the detection step at a sufficient low level that when indicated the moving machine element can be stopped by hand without any risk of injury.

4. Procedure according to one of the preceding claims, **characterized in that** the rotational movement is controlled by a speed control or a position change control.

5. Woodworking machine or table milling machine to carry out the procedure according to one of the preceding claims whereby the machine comprises a machining tool, which can be driven in order to carry out the machining step and/or to modify its position, and/or a machine element, which can at least be driven to modify its position, **characterized in that**á a surveillance of the rotational movement of the machining tool during the collision detection step is foreseen during which the machining tool is driven with a low speed and in particular with a very low rotational speed of 10 to 200 rpm and with such an appropriate low torque so that no damage occurs, neither to the machining tool nor to the machine element.

6. Woodworking machine according to claim 5, **characterized in that** a frequency controlled drive is foreseen whose frequency allows to adjust the speed of the drive.

7. Woodworking machine according to one of the preceding claims 5 or 6, **characterized in that** for the collision detection step, a supplemental drive can be coupled to the main drive.

8. Woodworking machine according to one of the preceding claims 5 to 7, **characterized in that** the machine comprises a movement control system.

9. Woodworking machine according to one of the preceding claims 5 to 8, **characterized in that** a closed loop control is used for the surveillance of the movement.

10. Woodworking machine according to one of the preceding claims 5 to 9, **characterized in that** while the drive is activated the control system sends out a collision signal and/or cuts off the drive as soon as it detects a stop of the movement.

11. Woodworking machine according to one of the preceding claims 5 to 10, **characterized in that** the mobile machine element can be a mechanical stop, a machine table or the delimiting surface of an opening within the machine table.

## Revendications

1. Procédé de détection d'une collision au niveau d'une machine d'usinage de bois ou d'une fraiseuse de table entre un outil d'usinage tournant à grande vitesse et un autre élément de machine, l'outil d'usinage étant mis en mouvement de rotation et d'usinage par un moteur et la position de l'outil d'usinage et/ou de l'autre élément de machine peuvent être modifiés et fixés, **caractérisé en ce que en ce que** le mouvement de rotation est surveillé par la détection d'un blocage de l'outil d'usinage suite à une collision pendant une étape préalable au véritable usinage avec un outil d'usinage mis mouvement de rotation lent ou entranné avec une force faible ou avec un moment de force faible en parallèle avec un déplacement de l'outil d'usinage et/ou de l'élément de machine et de sorte que le mouvement de rotation est effectué avec une force d'entrannement et un moment de force tellement faibles que la collision détectée ne résulte en aucun endommagement, ni au niveau de l'outil d'usinage, ni de l'élément de machine.

2. Procédé selon la revendication 1, **caractérisé ce que** la vitesse de rotation de l'outil d'usinage pendant l'étape de détection se situe entre 10 et 200 tours par minute et est de préférence d'environ 100 tours par minute et/ou en ce que la vitesse de rotation est située entre 0,1% et 5% de la vitesse nominale de la machine d'usinage et de préférence entre 0,4% et 3% de cette vitesse.

3. Procédé selon l'une des deux revendications précédentes, **caractérisé en ce que** le moment de force de l'outil d'usinage est réduit au minimum pendant l'étape de détection de fagon à rendre possible l'arrêt du mouvement de l'élément de machine à la main sans risque de blessure.

4. Procédé selon une des revendications précédentes, **caractérisé en ce que** le mouvement de rotation est surveillé par un système de contrôle de vitesse ou par un système de détection d'un changement de position.

5. Machine d'usinage de bois ou fraiseuse de table permettant d'appliquer le procédé selon une des revendications précédentes et possédant un outil d'usinage pouvant être déplacé par une commande pour réaliser des d'usinages et/ou pour le positionnement, et/ou un élément de machine pouvant également être déplacé par une commande pour son positionnement, **caractérisée en ce qu'**une surveillance du mouvement de rotation de l'outil d'usinage lors de l'étape de détection de collision est prévue pendant laquelle l'outil d'usinage est entranné à une vitesse très lente et en particulier à une vitesse de rotation allant de 10 à 200 trs/min avec un moment de force si faible qu'aucun endommagement de l'outil d'usinage ou de l'élément de machine ne puisse se produire.

6. Machine d'usinage de bois selon la revendication 5, **caractérisé en ce qu'**il existe un entrannement réglé en fréquence par lequel la vitesse d'entrannement peut être ajustée.

7. Machine d'usinage de bois selon une des revendications précédentes 5 ou 6, **caractérisée en ce qu'**une commande supplémentaire peut être ajoutée au moteur d'entrannement pour l'étape de détection de collision.

8. Machine d'usinage de bois selon une des revendications précédentes 5 à 7, **caractérisée en ce que** la machine d'usinage possède un système de contrôle dédié à la surveillance des mouvements.

9. Machine d'usinage de bois selon une des revendications précédentes 5 à 8, **caractérisée par** l'existence d'une boucle de commande active.

10. Machine d'usinage de bois selon une des revendications précédentes 5 à 9, **caractérisée en ce que** le système de contôle émet un signal de collision et/ou arrête la commande du mouvement dès qu'un arrêt du mouvement est détecté malgré une commande de mouvement activée.

11. Machine d'usinage de bois selon une des revendications précédentes 5 à 10, **caractérisée en ce que** l'élément de machine mobile peut être une butée, une table ou une surface délimitant une ouverture dans la table de machine.
